(19) Europäisches Patentamt
European Patent Office
Office européen des brevets

(11) **EP 4 431 270 A1**

(12) **EUROPEAN PATENT APPLICATION**
published in accordance with Art. 153(4) EPC

(43) Date of publication:
**18.09.2024 Bulletin 2024/38**

(21) Application number: **22892511.1**

(22) Date of filing: **18.10.2022**

(51) International Patent Classification (IPC):
**B32B 7/027** (2019.01)   **B32B 7/022** (2019.01)
**B32B 7/028** (2019.01)   **B32B 7/12** (2006.01)
**B32B 27/00** (2006.01)   **B32B 27/32** (2006.01)
**B65D 65/40** (2006.01)

(52) Cooperative Patent Classification (CPC):
**B32B 7/022; B32B 7/027; B32B 7/028; B32B 7/12;
B32B 27/00; B32B 27/32; B65D 65/40**

(86) International application number:
**PCT/JP2022/038788**

(87) International publication number:
**WO 2023/085011 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021 JP 2021184799
25.07.2022 JP 2022117810**

(71) Applicant: **Toyobo Co., Ltd.
Kita-ku
Osaka-shi, Osaka 530-0001 (JP)**

(72) Inventors:
• **IMAI Toru**
  **Inuyama-shi, Aichi 484-8508 (JP)**
• **TANEKI Kensuke**
  **Inuyama-shi, Aichi 484-8508 (JP)**
• **HAMANO Akito**
  **Osaka-shi, Osaka 530-0001 (JP)**
• **TAGA Atsushi**
  **Osaka-shi, Osaka 530-0001 (JP)**

(74) Representative: **Vossius & Partner
Patentanwälte Rechtsanwälte mbB
Siebertstrasse 3
81675 München (DE)**

(54) **RESIN LAMINATE FOR PACKAGING MATERIAL**

(57)    An object of the present invention is to provide a resin laminate for packaging material comprising a base layer and a sealant layer each comprising the same material with high processability.

A resin laminate for packaging material comprising at least a base layer and a sealant layer, wherein each of resin compositions for the base layer and the sealant layer comprises the same resin (A) as a main component, the base layer has a fusion initiation temperature (FIT-B), the sealant layer has a seal strength reaching temperature (SRT-S), the temperatures satisfying the following inequalities of from (1) to (3):

$$50°C \leq (FIT\text{-}B) - (SRT\text{-}S) \leq 90°C \quad \text{Inequality (1)}$$

$$90°C \leq (SRT\text{-}S) \leq 120°C \quad \text{Inequality (2)}$$

$$160°C \leq (FIT\text{-}B) \leq 180°C \quad \text{Inequality (3)}$$

**Description**

TECHNICAL FIELD

The present invention relates to a heat-sealable resin laminate for a packaging material comprising a base layer and a sealant layer both of which comprise the same material.

BACKGROUND ART

Conventionally, as constituent materials of packaging materials, various resin film materials consisting of, for example, polyolefin and polyester have been combined and used depending on the contents to be packaged and purposes of packaging.

For example, an unstretched polyethylene resin film having a low melting point is selected as a sealant film required to have heat-sealability, and a biaxially stretched polyester film or polypropylene film is selected as a surface material required to have heat resistance, and these films are laminated in lamination process and used.

In recent years, a global demand for "Sound Material-Cycle Society" has been increasing. With regard to packaging materials, a demand for easily recyclable eco-friendly "mono-material packaging" consisting of a single material has been increasing.

For example, in Patent Document 1, disclosed is a layered product for packaging comprising a base layer and a sealant layer each including a polyester film.

In Patent Document 2, disclosed is a packaging body comprising a base layer and a sealant layer each including polyethylene.

In Patent Document 3, disclosed is a laminate for packaging comprising a base layer and a seal layer each including polypropylene.

In conventional art, while the packaging materials were designed so that the characteristics of materials would be utilized, it has, however, been known that the use of single material have caused problems.

Particularly, in heat sealing process, the use of single material causes difficulties in achieving both of heat resistance and seal strength in some cases. For example, in Patent Document 3, a laminate for packaging material comprising a biaxially stretched polypropylene film as a base layer and an unstretched polypropylene film as a heat seal layer is disclosed. However, when heat sealing is conducted at a high temperature, the laminate has the problem of poor appearance at a sealed portion due to shrinking of the biaxially stretched polypropylene film as a base layer, in addition to the problem of the fusion of the base layer to a seal bar, which causes difficulties in processing. Further, the problem of lowered heat seal strength is caused in a heat sealing process of bag making at a high speed.

CITATION LIST

PATENT DOCUMENTS

Patent Document 1: WO 2020/262326

Patent Document 2: WO 2021/054349

Patent Document 3: JP-A-2020-157715

Patent Document 4: WO 2020/080507

SUMMARY OF THE INVENTION

PROBLEMS TO BE SOLVED BY THE INVENTION

The present invention has been done to solve the above problems, and it is an object of the present invention to provide a resin laminate for packaging material comprising a base layer and a sealant layer in which each of resin composition for the base layer and the sealant layer comprises the same resin

(A) as a main component, providing high processability.

SOLUTION TO THE PROBLEMS

As a result of diligent studies to solve the above problems, the present inventors have found that these problems can be solved by providing a resin laminate for packaging material comprising at least a base layer and a sealant layer, wherein each of resin composition for the base layer and the sealant layer comprises the same resin (A) as a main component, and a fusion initiation temperature (FIT-B) of the base layer and a seal strength reaching temperature (SRT-S) of the sealant layer are controlled to have a specific relationship and to be in a specific range. The present invention has the following features.

[1] A resin laminate for packaging material comprising at least a base layer and a sealant layer, wherein each of resin compositions for the base layer and the sealant layer comprises the same kind of resin (A) as a main component, the base layer has a fusion initiation temperature (FIT-B), the sealant layer has a seal strength reaching temperature (SRT-S), the temperatures satisfying the following inequalities of from (1) to (3):

$$50°C \leq (FIT\text{-}B) - (SRT\text{-}S) \leq 90°C \qquad \text{Inequality (1)}$$

$$90°C \leq (SRT\text{-}S) \leq 120°C \qquad \text{Inequality (2)}$$

$$160°C \leq (FIT\text{-}B) \leq 180°C \qquad \text{Inequality (3)}$$

[2] The resin laminate for packaging material according to [1], wherein the main component unit of the resin (A) is a propylene unit, and the base layer is a biaxially stretched polypropylene film.
[3] The resin laminate for packaging material according to [2], wherein the biaxially stretched polypropylene film of the base layer has a heat shrinkage rate at 150°C in a longitudinal direction of 6.5% or less and a heat shrinkage rate at 150°C in a width direction of 5.5% or less.
[4] The resin laminate for packaging material according to [2] or [3], wherein the biaxially stretched polypropylene film of the base layer has a Young's modulus in the longitudinal direction of 2.0 GPa or more and a Young's modulus in the width direction of 3.5 GPa or more.
[5] The resin laminate for packaging material according to any one of [1] to [4], wherein the resin laminate for packaging material has an adhesive layer between the base layer and the sealant layer.

EFFECTS OF THE INVENTION

The resin laminate for packaging material of the present invention is an easily recyclable mono-material packaging comprising at least the base layer and the sealant layer in which each of resin composition for the base layer and the sealant layer comprises the same kind of resin (A) as a main component. The base layer has high heat resistance, the difference between the fusion initiation temperature of the base layer and the sealing initiation temperature of the sealant layer is 50°C or more, and the sealant layer has the fusion initiation temperature equal to or lower than the specific temperature; therefore, in a heat sealing process, a heat seal strength and finish quality can be achieved.

DESCRIPTION OF EMBODIMENTS

Hereinafter, a resin laminate for packaging material according to the present invention will be described in detail.
The resin laminate for packaging material according to the present invention has laminate structure comprising a base layer and a sealant layer, and the difference between a fusion initiation temperature of the base layer and a seal strength reaching temperature of the sealant layer is 50°C or more.
Hereinafter, the present invention will be described in detail.

<Base layer>

In the present invention, the base layer is a film comprising at least one type of resin selected from the group consisting of polypropylene, polyester and polyamide as a main raw material resin, and the base layer is preferably a biaxially oriented film obtained through biaxial stretching from the viewpoint of heat resistance and stiffness. Particularly, polypropylene has a low melting point and is often used as a raw material for a sealant layer. The base layer of the present invention comprising a biaxially oriented polypropylene film is suitable to form a resin laminate for packaging material with a sealant layer comprising a resin composition including propylene units as a main component. The term "a main component" as used herein means a resin that is comprised in the base layer in an amount of 50% by mass or more.

(Characteristics of biaxially oriented polypropylene film for base layer)

In the present invention, the biaxially oriented polypropylene film for the base layer comprising a propylene unit as a main component has a fusion initiation temperature (hereinafter merely "FIT-B" in some cases) of preferably 160°C or higher and 180°C or lower, and more preferably 163°C or higher and 175°C or lower.

In case where the base layer has the fusion initiation temperature (FIT-B) of 160°C or higher, the base layer is not easily deformed by heat shrinkage even when heat-sealed at high temperatures, so the appearance of the packaged product is not impaired, and problems such as sticking to transport rolls during processing is reduced. The fusion initiation temperature (FIT-B) of 160°C or higher has advantages in heat sealing process at high temperatures conducted in automated packaging at high speed.

With regard to the upper limit of the fusion initiation temperature (FIT-B), a higher temperature is preferred for automated packaging at high speed, and the upper limit of 180°C or lower enables industrial production.

In the present invention, the fusion initiation temperature (FIT-B) of the biaxially oriented polypropylene film for the base layer can be adjusted by using a specific polypropylene resin, which is described below, as a raw material, and employing specific film-forming conditions.

In the present invention, the biaxially oriented polypropylene film for the base layer comprising a propylene unit as a main component preferably has a heat shrinkage rate at 150°C in the longitudinal direction of 6.5% or less and a heat shrinkage rate at 150°C in the width direction of 5.5% or less, more preferably a heat shrinkage rate at 150°C in the longitudinal direction of 6.0% or less and a heat shrinkage rate at 150°C in the width direction of 5.0% or less, and further preferably a heat shrinkage rate at 150°C in the longitudinal direction of 5.0% or less and a heat shrinkage rate at 150°C in the width direction of 3.0% or less. A high heat shrinkage at 150°C may cause significant shrinking of the base layer during heat sealing process and thus the appearance of the packaged product may be impaired, further, the problem of peeling at the heat-sealed portion. In contrast, a low heat shrinkage at 150°C allows the heating temperature in heat sealing process to be increased, enabling processing of heat-sealing in a short time and thus processing of bag-making at high speed.

In the present invention, with respect to stiffness, the biaxially oriented polypropylene film for the base layer comprising a propylene unit as a main component preferably has a Young's modulus in the longitudinal direction of 2.0 GPa or more and a Young's modulus in the width direction of 3.5 GPa or more. More preferably, the film has a Young's modulus in the longitudinal direction of 2.5 GPa or more and a Young's modulus in the width direction of 4.0 GPa or more. By increasing the Young's modulus to a higher value, the stiffness of the base layer can be enhanced and wrinkling during processing such as bag-making can be reduced, further, the effect of easy access to the contents of the bag produced can be expected. In addition, by increasing the stiffness, the thickness of the film can be reduced. To reduce the thickness of the base layer allows heat to be easily conducted to the sealant layer during the heat sealing process, enabling a decrease in heating temperature; thus, a reduction of wrinkling due to shrinking by heat and an increase in processing speed can be achieved.

In the present invention, the thickness of the biaxially oriented polypropylene film for the base layer comprising a propylene unit as a main component is not particularly limited, and a thinner film can easily transfer heat from a seal bar to the sealant layer during heat sealing, enabling a decrease in heating temperature. By decreasing the heating temperature, wrinkling due to shrinking by heat can be reduced, allowing a packaged product to have a good appearance and finish quality. In addition, the decreased heating temperature enables an increased processing speed.

When the film is too thin, the film may not have sufficient stiffness for the base layer. If the stiffness of the base layer is insufficient, products may tip over when filled for displaying and wrinkling may be caused during processing. Taking these problems into consideration, the thickness of the polypropylene film for the base layer is preferably from 3 $\mu$m to 50 $\mu$m, more preferably from 10 $\mu$m to 35 $\mu$m, further preferably from 12 $\mu$m to 19 $\mu$m, and a thinnest film possible is preferably selected within the range that do not leads to problems caused by insufficient stiffness.

(Method for producing biaxially oriented polypropylene film for base layer)

In the present invention, the biaxially oriented polypropylene film for the base layer comprising a propylene unit as a main component can have characteristic adjusted within the above range by employing the following raw material composition and the following film-forming conditions.

As a main raw material resin of the biaxially oriented polypropylene film, at least one polypropylene resin selected from the group consisting of propylene homopolymer, copolymers of propylene and ethylene and/or an $\alpha$-olefin having four or more carbon atoms, and mixtures thereof can be used.

A propylene homopolymer substantially free from ethylene and/or an α-olefin having four or more carbon atoms is preferred. Even if the propylene homopolymer contain the component of ethylene and/or an α-olefin having four or more carbon atoms, the amount of component of ethylene and/or an α-olefin having four or more carbon atoms is preferably 1 mol% or less. The upper limit of the amount of the component is more preferably 0.5 mol%, further preferably 0.3 mol%, and particularly preferably 0.1 mol%. The amount of the component within the range enables improvement in crystallinity.

Examples of the α-olefin component having four or more carbon atoms contained in the copolymer include 1-butene, 1-pentene, 3-methylpentene-1, 3-methylbutene-1, 1-hexene, 4-methylpentene-1, 5-ethylhexene-1, 1-octene, 1-decene, 1-dodecene, 1-tetradecene, 1-hexadecene, 1-heptadecene, 1-octadecene, and 1-eicosene. As the polypropylene resin, two or more different types of propylene homopolymers, copolymers of propylene and ethylene and/or an α-olefin having four or more carbon atoms, and mixtures thereof can be used.

The amount of the propylene homopolymer and the copolymer of propylene and ethylene and/or an α-olefin having four or more carbon atoms in the resin composition for the biaxially oriented polypropylene film is preferably 50% by mass or more, more preferably 60% by mass or more, further preferably 70% by mass or more, further more preferably 80% by mass or more, and particularly preferably 90% by mass or more.

The amount of the propylene unit as a main component of the resin composition for the biaxially oriented polypropylene film is preferably 60% by mass or more, more preferably 70% by mass or more, further preferably 80% by mass or more, further more preferably 90% by mass or more, and particularly preferably 95% by mass or more with respect to the whole resin composition.

A polypropylene raw material as a raw material of the biaxially oriented polypropylene film has a mesopentad fraction ([mmmm]%), which is an index of stereoregularity, of from 97.0% to 99.9%, preferably from 97.5% to 99.7%, further preferably from 98.0% to 99.5%, and particularly preferably from 98.5% to 99.3%.

When the polypropylene raw material has the mesopentad fraction of 97.0 or more, crystallinity of the polypropylene resin can be increased, a melting point of crystals, the degree of crystallinity, and the degree of crystalline orientation in the film can be enhanced, enabling stiffness and heat resistance at high temperature. When the polypropylene raw material has the mesopentad fraction of 99.9% or less, the production cost of the polypropylene resin can be reduced, and breakage can also be reduced during film formation. The polypropylene raw material more preferably has the mesopentad fraction of 99.5% or less. The mesopentad fraction can be measured by nuclear magnetic resonance method (so-called NMR).

In order to adjust the mesopentad fraction of the polypropylene resin within the above range, a method involving washing of the polypropylene resin powder obtained with solvents such as n-heptane, a method involving the selection of cocatalyst and/or cocatalyst, or a method involving the selectin of components for the polypropylene resin composition is preferably employed.

To improve quality, the biaxially oriented polypropylene film for the base layer can contain additives such as an antistatic agent, an anti-blocking agent, a heat stabilizer, an antioxidant, and a UV absorber to the extent that the effect of the present invention is not imparted.

In the present invention, the biaxially oriented polypropylene film for the base layer is preferably a biaxially oriented film obtained by biaxial stretching from the viewpoint of stiffness and heat resistance. It is known that biaxial stretching allows crystals of polymer to orientate, thereby increasing elastic modulus and melting point. The biaxial stretching can be performed by any one of an inflation simultaneous biaxial stretching method, a tenter simultaneous biaxial stretching method, a tenter sequential biaxial stretching method, and a sequential biaxial stretching method involving roll stretching and tenter stretching. Among them, a tenter sequential biaxial stretching method, and a sequential biaxial stretching method involving roll stretching and tenter stretching is preferably employed from the viewpoint of stability in film formation and uniform thickness. The stretching in the width direction is preferably performed after the stretching in the longitudinal direction, and the stretching in the width direction may be performed after the stretching in the longitudinal direction.

In order to make the biaxially oriented polypropylene film for the base layer of the present invention having a higher fusion initiation temperature, a reduced heat shrinkage rate at 150°C, and increased Young's modulus for higher stiffness, a raw material resin having high stereoregularity and thus high crystallinity should preferably be selected, a stretching ratio should preferably be increased in the stretching process in the film formation, and a heat treatment temperature should preferably be increased.

In a preferred method for forming the film, for example, a polypropylene resin having high stereoregularity with a mesopentad fraction ([mmmm]%) of from 97.0% to 99.9% is used as a raw material and the raw material is treated as follows. The raw material resin is heated and melted at a temperature of from 230°C to 270°C, and a molten polypropylene resin is extruded from a T-die into a sheet shape. The resulting molten sheet is then contacted with a cooling roll set at 50°C or lower, followed by rapid cooling involving immersion of the cooled molten sheet into a water tank set at 30°C or lower, if needed, to obtain an unstretched sheet. Subsequently, the unstretched sheet is longitudinally stretched from 3.8 times to 4.2 times at a temperature of from 130°C to 150°C with a roll stretching machine, then clipped at both ends, and preheated at a temperature of from 170°C to 175°C in a tenter. After the preheating, the longitudinally stretched sheet is stretched 9 times or more at a temperature of from 150°C to 160°C in the width direction, followed by heat treatment conducted at a temperature of from 170°C to 175°C while relaxing the film in the width direction by from 0% to 10%.

[Sealant layer]

In the present invention, the sealant layer is a film comprising a resin composition that comprises at least one type of resin selected from the group consisting of polypropylene, polyester, and polyamide as a main component, wherein each of the resin compositions for the base layer and the sealant layer comprises the same resin (A) as a main component. The sealant layer of the present invention needs to have low melting point, therefore, the sealant layer is preferably not subjected to a stretching process such as biaxial stretching. With regard to material for the sealant layer, a polypropylene resin is preferred due to its low melting point. The term "main component" as used herein means a resin which is comprised in the sealant layer in an amount of 50% by mass or more.

(Polypropylene film for sealant layer)

In case where a film comprising a propylene unit as a main component unit is used for the sealant layer in the present invention, the seal strength reaching temperature (SRT-S) (hereinafter "SRT-S" in some cases) is 90°C or higher and 120°C or lower, more preferably 100°C or higher and 115°C or lower, and further preferably 105°C or higher and 110°C or lower. The seal strength reaching temperature (SRT-S) of 120°C or lower does not need heat sealing at a high temperature and thus the base layer is not easily deformed by heat shrinking, therefore, the appearance of the packaged product is less likely to be impaired. The seal strength reaching temperature of 90°C or higher can improve heat resistance and prevent sticking to the transport rolls during processing.

The seal strength reaching temperature (SRT-S) of the sealant layer comprising a propylene unit as a main component unit is known to be dependent on the melting point of resin composition for the sealant layer. Therefore, the melting point can be adjusted to any temperature by mixing several resins each having different melting point.

When the sealant layer comprises a propylene unit as a main component unit, the main raw material resin may include at least one type of polypropylene resin selected from the group consisting of propylene homopolymer, copolymers of propylene and ethylene and/or an α-olefin having four or more carbon atoms, and mixtures thereof.

The copolymer may be a random copolymer, a block copolymer, or a graft copolymer. In the case of a copolymer, a copolymerization component is not particularly limited, and examples of the copolymerization component include lower α-olefins such as ethylene, butene, heptene, hexene, and octene; and dienes such as butadiene and isoprene. In the case of a polymer obtained by copolymerization, the polymer may be a bipolymer or multicomponent copolymers such as terpolymer and a copolymer derived from more than three species of monomer.

The stereoregularity is not particularly limited, and the polymer may be an isotactic polymer, a syndiotactic polymer, or an atactic polymer. The stereoregularity of the polymer can be selected appropriately according to the characteristics of the market requirements. The polypropylene resin has a density of preferably from 870 kg/m$^3$ to 912 kg/m$^3$, and further preferably from 880 kg/m$^3$ to 905 kg/m$^3$. The density of less than 870 kg/m$^3$ is not preferred due to decreases in stiffness, heat resistance, and anti-blocking properties. The density of more than 912 kg/m$^3$ is not preferred due to the deterioration of low-temperature heat sealability.

Polyethylene-based resins can be blended into the polypropylene-based film for the sealant layer which are mainly composed of polypropylene units to provide low-temperature sealing properties. The polypropylene-based resins are resins whose main component is ethylene, and for example, exemplified by ethylene homopolymer such as high pressure method low density polyethylene, linear low density polyethylene, medium density polyethylene, and high density polyethylene. In addition, random or block copolymers with monomers such as α-olefin including propylene, butene-1, pentene-1, hexene-1, 3-methylbutene-1, 4-methylpenten-1, and octene-1; vinyl acetate; (meth)acrylic acid; and (meth)acrylic ester can be used. A smaller amount of the polyethylene-based resin is preferred in terms of mono-material.

The polypropylene film for the sealant layer comprising a propylene unit as a main component unit, is preferably a laminated film. For example, the sealant layer preferably has a layer configuration of "heat seal layer/substrate layer (base layer)" or "heat seal layer/substrate layer (base layer)/surface layer". By increasing the stiffness of the substrate (base layer) of the sealant layer, the stiffness of the whole sealant layer can be increased. To provide a surface layer to the sealant layer can improve slipperiness of the sealant layer and also adhesion between the base layer and the biaxially stretched polypropylene film.

A main raw material resin for the heat seal layer of the sealant layer may be at least one type of polypropylene resin selected from the group consisting of propylene homopolymer, copolymers of propylene and ethylene and/or an α-olefin having four or more carbon atoms, and mixtures thereof. The copolymer may be a random copolymer, a block copolymer, or a graft copolymer. In the case of a copolymer, a copolymerization component is not particularly limited, and examples of the copolymerization component include lower α-olefins such as ethylene, butene, heptene, hexene, and octene; and dienes such as butadiene and isoprene. In the case of a polymer obtained by copolymerization, the polymer may be a bipolymer or multicomponent copolymers such as terpolymer and a copolymer derived from more than three species of monomer. The stereoregularity is not particularly limited, and the polymer may be an isotactic polymer, a syndiotactic polymer, or an atactic polymer. The stereoregularity of the polymer can be selected appropriately according to the characteristics of the market requirements. The polypropylene resin has a density of preferably from 870 kg/m$^3$ to 912 kg/m$^3$, and further preferably from 880 kg/m$^3$ to 905 kg/m$^3$. The density of less than 870 kg/m$^3$ is not preferred due to decreases in stiffness, heat resistance, and anti-blocking properties. The density of more than 912 kg/m$^3$ is not preferred due to the deterioration of low-temperature heat sealability.

A content of the propylene unit as a main component unit of the resin composition in the heat seal layer of the sealant layer is preferably 60% by mass or more, more preferably 70% by mass or more, further preferably 80% by mass or more.

A main raw material resin for the substrate layer (base layer) of the sealant layer is at least one type of polypropylene resin selected from the group consisting of propylene homopolymer, random copolymers of propylene and α-olefins such as ethylene, butene-1, pentene-1, hexene-1, 3-methylbutene-1, 4-methylpentene-1, and octene-1, and block copolymers of propylene and α-olefins such as ethylene, butene-1, pentene-1, hexene-1, 3-methylbutene-1, 4-methylpentene-1, and octene-1. When a copolymer is used, a copolymer with less amount of the copolymerization components than the heat seal layer is preferably used to increase stiffness.

A content of the propylene unit as a main component unit of the resin composition in the substrate layer (base layer) of the sealant layer is preferably 60% by mass or more, more preferably 70% by mass or more, further preferably 80% by mass or more, further more preferably 90% by mass or more, and particularly preferably 95% by mass or more with respect to the whole resin composition.

The main component for the surface layer of the sealant layer is at least one type of polypropylene resin selected from the group consisting of propylene homopolymer, random copolymers of propylene and α-olefins such as ethylene, butene-1, pentene-1, hexene-1, 3-methylbutene-1, 4-methylpentene-1, and octene-1, and block copolymers of propylene and α-olefins such as ethylene, butene-1, pentene-1, hexene-1, 3-methylbutene-1, 4-methylpentene-1, and octene-1. When a copolymer is used, a copolymer with less amount of the copolymerization components than the heat seal layer is preferably used to increase stiffness. A lubricant may be added to improve slipperiness. Further, in order to improve laminate strength of the laminate comprising the biaxially oriented polypropylene film of the base layer and the sealant layer while maintaining high stiffness, a polypropylene resin obtained by copolymerization with a small amount of α-olefin can be blended.

A content of the propylene unit as a main component unit of the resin composition in the surface layer of the sealant layer is preferably 60% by mass or more, more preferably 70% by mass or more, further preferably 80% by mass or more, further more preferably 90% by mass or more, and particularly preferably 95% by mass or more with respect to the whole resin composition.

The polypropylene film for the sealant layer comprising a propylene unit as a main component unit is preferably a laminated film produced by melting raw material resins, in the case of laminated film, in multiple extruders, co-extruding the resulting molten resins from a T-die into a sheet shape followed by solidification by cooling with a cooling roll and subsequent winding into a roll shape, and, for example, an unstretched polypropylene film for the sealant layer can be produced with the configuration of "heat seal layer/substrate layer (base layer)/surface layer". The unstretched film may be stretched in the longitudinal direction with a roll stretching machine before winding into a roll, to the extent that the heat sealability is not impaired.

(Relationship between fusion initiation temperature (FIT-B) of base layer and seal strength reaching temperature (SRT-S) of sealant layer)

The relationship between the fusion initiation temperature (FIT-B) of the base layer and the seal strength reaching temperature (SRT-S) of the sealant layer is expressed by the following inequality.

$$50°C \leq (FIT\text{-}B) - (SRT\text{-}S) \leq 90°C \qquad \text{Inequality (1)}$$

FIT-B is higher than SRT-S, and the difference between FIT-B and SRT-S is 50°C or more and preferably 60°C or more. When the difference between FIT-B and SRT-S is 50°C or more, the temperature of a seal bar can be set to a higher temperature in the high-temperature and high-speed bag-making, enabling bag-making at higher temperature, a heat sealed portion without wrinkling and deformation, and sufficient heat seal strength.

The difference between FIT-B and SRT-S is 90°C or less. A larger difference between FIT-B and SRT-S is advantageous for high-temperature and high-speed bag-making. However, when the base layer has a low melting point and the difference between FIT-B and SRT-S is 90°C or less, a fusion temperature of the sealant layer may not be lowered, resulting in prevention of blocking. In the present invention, the base layer and the sealant layer comprises the same resin (A) as a main component, thereby allowing the range for selecting resins not to be reduced.

[Resin laminate for packaging material]

(Method for laminating base layer and sealant layer)

The resin laminate for packaging material of the present invention comprises the base layer and the sealant layer, wherein each of the layer comprises the same main component. The base layer and the sealant layer can be produced as separate films and the films can be laminated with an adhesive. Alternatively, the base layer and the sealant layer can be laminated by coextrusion.

The resin laminate for packaging material of the present invention has layer configurations, such as "base layer/sealant layer", which is a two-layered configuration, and "laminating material (a third layer)/base layer/sealant layer", which is a three-layered configuration, and each layer comprises the same main component. The total thickness of each of the layer configuration is not particularly limited, and the total thickness is preferably from approximately 30 μm to 200 μm and more preferably from approximately 25 μm to 150 μm.

(Seal strength reaching temperature of laminate)

The resin laminate for packaging material of the present invention has the upper limit of the seal strength reaching temperature in each of the longitudinal direction and the width direction of preferably 120°C, more preferably 118°C, further preferably 116°C, and most preferably 114°C. The seal strength reaching temperature in the longitudinal and width directions of 120°C or lower allows the seal temperature to be lowered in bag-making from the resin laminate for packaging material and thus wrinkling due to shrinking by heat can be reduced, enabling good-looking packaged product. The lower limit of the seal strength reaching temperature in each of the longitudinal direction and the width direction is 90°C and more preferably 95°C.

(Reaching heat seal strength of laminate)

The resin laminate for packaging material of the present invention has the lower limit of the reaching heat seal strength in the longitudinal direction of preferably 5 N/15mm, more preferably 8 N/15mm, further preferably 10 N/15mm, further more preferably 12 N/15mm, and particularly preferably 15 N/15mm. The reaching heat seal strength in the longitudinal direction of 5 N/15mm or more can reduce the burst of a packaging bag formed from the resin laminate for packaging material. The resin laminate for packaging material of the present invention does not have preferred upper limit of the reaching heat seal strength in the longitudinal direction, and the upper limit is practically 30 N/15mm, and preferably 25 N/15m or less.

(Finish quality after high-temperature heat seal)

The appearance of a heat sealed portion of the laminate is evaluated in accordance with the following three levels based on the degree of peeling and wrinkling of the base layer, when the heat sealing is conducted at the above-described seal strength reaching temperature of the laminate and when the heat sealing is conducted at a temperature 10°C higher than the seal strength reaching temperature. The base layer with entire peeling and/or significant wrinkling is bad, the base layer with partial wrinkling is acceptable, and the base layer without peeling and wrinkling is good.

(Heat seal process)

In order to form a bag for packaging foodstuffs from the resin laminate for packaging material of the present invention, the resin laminate for packaging material of the present invention is formed into a bag having an opening, then the bag is filled with the contents, and the opening is heated to be hermetically sealed by fusing the sealant layers of the bag. The same procedure is often employed when a bag is made while filling the bag in processing with food.

Generally, when a bag is made, a base layer is laminated with a sealant layer to form a laminate, and a process of heat sealing is often employed to fuse the sealant layers of the laminate by heating from the base laser side. In the heat sealing process, sealing is conducted by pressing films with a heating bar from the base layer side, and the direct heating to the base layer causes wrinkling by shrinking and fusion of the base layer to the seal bar when the base layer has low heat resistance. The bag produced should be less wrinkled for the durability and also for increasing the willingness to buy. The fusion of the base layer causes contamination of the bag surface and ink peeling when the bag is printed, resulting in lowered design properties.

In addition, a demand for bag making process at higher speed has been increasing. In order to meet the demand, heat sealing process at higher temperatures and thinning of the base layer are required, especially, in the fusing process of the opening portion of a bag filled with the contents, a heat sealing process at far higher temperatures is required. Even in these cases, the shrinkage of the base layer should preferably be low so that the fusion of the base layer to the seal bar can be preferably prevented.

EXAMPLES

Hereinafter, the present invention will be described in detail with Examples. The followings are methods employed for measurements and evaluation of characteristics.

(1) Mesopentad fraction

A mesopentad fraction ([mmmm]%) of the polypropylene resin was measured by $^{13}$C-NMR and calculated in accordance with the method described in Zambelli et. al., Macromolecules, Vol. 6, p.925 (1973). The measurement by $^{13}$C-NMR was conducted at 110°C with a solution obtained by dissolving 200 mg of a sample into an 8:2 mixed solution of o-dichlorobenzene and deuterated benzene at 135°C using AVANCE 500 manufactured by BRUKER.

(2) Film thickness

A film thickness was measured with Millitron, type: 1202D, manufactured by Seiko EM.

(3) Heat shrinkage rate of base layer

The measurement was conducted by the following method in accordance with JIS Z 1712. A film was cut in the longitudinal direction and the width direction to obtain a test piece having a width of 20 mm and a length of 200 mm, and the resulting test piece was hung in a hot air oven set at 150°C to be heated for 5 minutes. The length of the test piece after heating was measured, and a heat shrinkage rate of the base layer was determined by calculating the percentage of length of shrinkage to the original length.

(4) Young's modulus of base layer

A Young's modulus at 23°C in the longitudinal direction of the film and a Young's modulus at 23°C in the width direction of the film were measured in accordance with JIS K 7127. A test piece was cut out from the film so as to have dimensions of 15 mm × 200 mm and set to a tensile tester (dual column desktop tester, model: Instron 5965, manufactured by Instron Japan Company Limited) with a distance between chucks of 100 mm. A tensile test was performed at a tensile rate of 200 mm/min. A Young's modulus of the base layer was determined from the resulting strain-stress curve, specifically from the slope of the linear portion at the initial stage of the elongation.

(5) Fusion initiation temperature (FIT-B) of base layer

Between two sheets of a polyethylene terephthalate film (type: E5100, thickness: 12 $\mu$m, manufactured by TOYOBO CO., LTD.), which is for anti-adhesive purposes, each measuring 300 mm × 100 mm with a longer dimension in the longitudinal direction, two sheets of base layers used in Examples and Comparative Examples, each measuring 300 mm × 60 mm with a longer dimension in the longitudinal direction, were placed so that corona-treated surfaces of the base layers would face with each other. The stack thus obtained was heat sealed with a heat gradient tester (manufactured by Toyo Seiki Seisaku-sho, Ltd.) at 0.2 MPa for 1 second. Subsequently, a 15 mm wide test piece was cut from the stack after heat sealing, and a T-peel seal strength in the longitudinal direction (N/15mm) was measured with the test piece by using a tensile tester (autograph, model: S-100-D, manufactured by Shimadzu Corporation) at a tensile rate of 200 mm/min. A graph was plotted with the seal temperature on the horizontal axis and the seal strength on the vertical axis, and the fusion initiation temperature of the base layer (FIT-B) was determined to be a temperature (°C) at which a seal strength reached 1 N/15mm.

(6) Seal strength reaching temperature (SRT-S) of sealant layer

Between two sheets of a polyethylene terephthalate film (type: E5100, thickness: 12 $\mu$m, manufactured by

TOYOBO CO., LTD.), which is for anti-adhesion purposes, each measuring 300 mm × 100 mm with a longer dimension in the longitudinal direction, two sheets of sealant layers used in Examples and Comparative Examples, each measuring 300 mm × 60 mm with a longer dimension in the longitudinal direction, were placed so that the sealant layers (sealing surfaces when the sealant layer has a multilayer configuration) would face with each other. The stack thus obtained was heat sealed with a heat gradient tester (manufactured by Toyo Seiki Seisaku-sho, Ltd.) at 0.2 MPa for 1 second. Subsequently, a 15 mm wide test piece was cut from the stack after heat sealing, and a T-peel seal strength in the longitudinal direction (N/15mm) was measured with the test piece by using a tensile tester "autograph" (model: S-100-D, manufactured by Shimadzu Corporation) at a tensile rate of 200 mm/min. A graph was plotted with the seal temperature on the horizontal axis and the seal strength on the vertical axis, and the seal strength reaching temperature of the sealant layer (SRT-S) was determined to be a temperature (°C) at which a seal strength reached 5 N/15mm.

(7) Seal strength reaching temperature of laminate

A laminate including the base layer and the sealant layer was produced by using a continuous dry laminating machine as follows. To the corona-treated surfaces of biaxially oriented polypropylene films obtained in Examples and Comparative Examples, an adhesive was applied by gravure coating so that a coat-weight when dried would become 3.0 g/m$^2$, and the films coated with the adhesive were guided into a drying zone to be dried at 80°C for 5 seconds. Subsequently, a sealant layer was laminated to the film's surface coated with the adhesive between rolls provided on the downstream side (roll pressure: 0.2 MPa, roll temperature: 60°C). The laminate thus obtained was aged at 40°C for 3 days in a wound state.

As the adhesive, an adhesive for dry lamination obtained by mixing 28.9% by mass of a main agent (type: TM569, manufactured by Toyo-Morton, Ltd.), 4.00% by mass of a curing agent (type: CAT10L, manufactured by Toyo-Morton, Ltd.), and 67.1% by mass of ethyl acetate was used.

Next, a test piece for measurement, measuring 15 mm in width × 200 mm in length with a longer dimension in the longitudinal direction, was cut out from the laminate produced, and the sealant layers of two test pieces of the laminate were heat sealed with a heat gradient tester (manufactured by Toyo Seiki Seisaku-sho, Ltd.) at 0.2 MPa for 1 second.

The heat sealing was conducted at intervals of 5°C starting from 90°C, then the test pieces cut out with a width of 15 mm was set to a tensile tester (TENSILON, manufactured by ORIENTEC CORPORATION) with an initial distance between chucks of 100 mm, and a T-peel strength in the longitudinal direction was measured at a tensile rate of 200 mm/min. A graph was plotted with the heat sealing temperature on the horizontal axis and the seal strength on the vertical axis, and the seal strength reaching temperature (°C) of the laminate was determined to be a temperature at which a seal strength reached 5 N/15mm.

(8) Reaching heat seal strength of laminate

In the graph plotted with the heat seal temperature on the horizontal axis and the seal strength on the vertical axis in above (7), a reaching heat seal strength of a laminate was determined to be a value when the seal strength reached maximum.

(9) Finish quality after high-temperature heat seal

The appearance of a heat sealed portion of a laminate was evaluated in the following three levels based on the degree of peeling and wrinkling of the base layer, when the heat sealing was conducted at the above-described seal strength reaching temperature of the laminate and when the heat sealing was conducted at a temperature 10°C higher than the seal strength reaching temperature.

Good: no peeling or wrinkling of base layer film.
Acceptable: partial wrinkling of base layer film.
Bad: entire peeling and/or significant wrinkling of base layer film.

Example 1

A resin laminate for packaging material was produced by laminating the following biaxially stretched polypropylene film as a base layer and the following unstretched polypropylene film as a sealant layer by the method described above. The biaxially stretched polypropylene film as a base layer had a fusion initiation temperature (FIT-B) of 166°C, a heat shrinkage rate at 150°C in the longitudinal direction of 4.5%, a heat shrinkage rate at 150°C in the width direction of 0.8%, a Young's modulus in the longitudinal direction of 2.2 GPa, and a Young's modulus in the width direction of 3.6 GPa. The unstretched polypropylene film of the sealant layer had a seal strength reaching temperature (SRT-S) of 111°C, and a difference between the fusion initiation temperature (FIT-B) of the base layer and (SRT-S) was 55°C.

The resin laminate for packaging material was obtained with good heat seal finish quality, without peeling and wrinkling.

Base layer: a polypropylene resin composition was prepared by blending 80 parts by mass of propylene homopolymer PP-1 (MFR = 7.5 g/10min, [mmmm] = 98.9%, Tc = 116°C, Tm = 163°C) as a polypropylene resin and 20 parts by mass of propylene homopolymer PP-2 (MFR = 3.0 g/10min, [mmmm] = 98.4%, Tc = 116°C, Tm = 163°C) as a polypropylene resin. The polypropylene resin composition was heated and melted at 250°C in an extruder, and a molten polypropylene resin composition thus obtained was extruded from a T-die at 250°C into a sheet shape. The resulting molten sheet was then contacted with a cooling roll set at 37°C, and the molten sheet was directly introduced into a water tank set at 29°C to obtain an unstretched sheet. Subsequently, the unstretched sheet was longitudinally stretched 4.0 times at 140°C with two pairs of rolls, then the resulting longitudinally stretched sheet was clipped at both ends and introduced into a hot air oven (tenter) to be preheated at 174°C. After preheating, the longitudinally stretched sheet was stretched 10 times at 160°C in the width direction and subjected to heat treatment at 174°C with relaxing in the width direction by 7%.

On one surface of the resulting biaxially oriented polypropylene film, corona treatment was conducted with a corona plasma treatment equipment (manufactured by KASUGA DENKI, INC.) under the condition of 13 W/m$^2$·min. After the corona treatment, the film was wound with a winder, and a biaxially oriented polypropylene film with a thickness of 16 $\mu$m was obtained and used.

Sealant layer: An unstretched polypropylene-based film having the structure of "heat seal layer/ substrate layer (base layer) of the sealant layer/ surface layer", a thickness ratio of 1/ 2/1, and a thickness of 30 $\mu$m was obtained for a sealant layer by melting each resin at 240°C and co-extruding them from a T-die using three extruders into a sheet shape followed by solidification by cooling with a cooling roll set at 30°C and subsequent winding into a roll shape at a rate of 150 m/min.

As a raw material for the heat seal layer, a resin composition obtained by blending 55% by mass of propylene-ethylene-butene random copolymer (FL6745 manufactured by Sumitomo Chemical Co., Ltd., melting point: 130°C, MFR: 7 g/10min) and 45% by mass of linear low density polyethylene resin (Evolue SP2040 manufactured by Prime Polymer Co., Ltd., melting point: 112°C, MFR: 3.8 g/10min) was used. As raw materials for the substrate layer (base layer) and the surface layer opposite the heat seal layer, propylene-ethylene-butene random copolymer (melting point: 148°C, MFR: 7.0 g/10min) was used.

The propylene unit component amount of the sealant layer was 70% by mass or more.

Example 2

A resin laminate for packaging material was produced by laminating the following biaxially stretched polypropylene film as a base layer and the following unstretched polypropylene film as a sealant layer by the method described above, similarly to Example 1. The biaxially stretched polypropylene film as a base layer had a thickness of 16 $\mu$m, a fusion initiation temperature (FIT-B) of 165°C, a heat shrinkage rate at 150°C in the longitudinal direction of 4.7%, a heat shrinkage rate at 150°C in the width direction of 2.0%, a Young's modulus in the longitudinal direction of 2.3 GPa, and a Young's modulus in the width direction of 4.0 GPa. The unstretched polypropylene film of the sealant layer had a seal strength reaching temperature (SRT-S) of 111°C, and a difference between (FIT-B) and (SRT-S) was 54°C.

The resin laminate for packaging material was obtained with good heat seal finish quality, without peeling and wrinkling.

Base layer: a film was produced in the same manner as Example 1 except that the relaxation rate in the heat treatment was changed to 6.0%, and a biaxially oriented polypropylene film with a thickness of 16 $\mu$m was obtained and used.

Sealant layer: an unstretched polypropylene film having a thickness of 30 $\mu$m was used, the same as in Example 1.

Example 3

A resin laminate for packaging material was produced by laminating the following biaxially stretched polypropylene film as the base layer and the following unstretched polypropylene film as the sealant layer in the same manner as in Example. The biaxially stretched polypropylene film as the base layer had a thickness of 16 $\mu$m, a fusion initiation temperature (FIT-B) of 164°C, a heat shrinkage rate at 150°C in the longitudinal direction of 5.0%, a heat shrinkage rate at 150°C in the width direction of 4.7%, a Young's modulus in the longitudinal direction of 2.0 GPa, and a Young's modulus in the width direction of 4.2 GPa. The unstretched polypropylene film of the sealant layer a seal strength reaching temperature (SRT-S) of 111°C, and a difference between (FIT-B) and (SRT-S) was 53°C.

The resin laminate for packaging material was obtained with good heat seal finish quality, without peeling and wrinkling.

Base layer: a film was produced in the same manner as Example 2 except that the heat treatment temperature was changed to 172°C, and a biaxially oriented polypropylene film with a thickness of 16 μm was obtained .

Sealant layer: an unstretched polypropylene film having a thickness of 30 μm was used, the same as in Example 1.


Example 4

A resin laminate for packaging material was produced by laminating the following biaxially stretched polypropylene film as the base layer and the following unstretched polypropylene film as the sealant layer in the same manner as in Example 1. The biaxially stretched polypropylene film as a base layer had a thickness of 16 μm, a fusion initiation temperature (FIT-B) of 161°C, a heat shrinkage rate at 150°C in the longitudinal direction of 6.1%, a heat shrinkage rate at 150°C in the width direction of 5.5%, a Young's modulus in the longitudinal direction of 2.2 GPa, and a Young's modulus in the width direction of 4.3 GPa. The unstretched polypropylene film of the sealant layer had a seal strength reaching temperature (SIT-S) of 111°C, and a difference between (FIT-B) and (SRT-S) was 50°C.

The resin laminate for packaging material was obtained with good heat seal finish quality without peeling and wrinkling at the seal strength reaching temperature, but winkles were observed in some parts of the film at the temperature 10°C higher than the seal strength reaching temperature.

Base layer: a film was produced in the same manner as Example 1 except that the stretching ratio in the longitudinal direction was changed to 4.5 times and the heat treatment temperature was changed to 170°C, and a biaxially oriented polypropylene film with a thickness of 16 μm was obtained and used.

Sealant layer: an unstretched polypropylene film having a thickness of 30 μm was used, the same as in Example 1.


Comparative Example 1

A resin laminate for packaging material was produced by laminating the following biaxially stretched polypropylene film as the base layer and the following unstretched polypropylene film as the sealant layer in the same manner as in employing the s Example 1. The biaxially stretched polypropylene film as a base layer had a thickness of 16 μm, a fusion initiation temperature (FIT-B) of 152°C, a heat shrinkage rate at 150°C in the longitudinal direction of 15.5%, a heat shrinkage rate at 150°C in the width direction of 22.7%, a Young's modulus in the longitudinal direction of 1.8 GPa, and a Young's modulus in the width direction of 2.9 GPa. The unstretched polypropylene film of the sealant layer had a seal strength reaching temperature (SRT-S) of 111°C, and a difference between (FIT-B) and (SRT-S) was 41°C.

The resin laminate for packaging material was obtained with bad heat seal finish quality due to peeling of the surface of the base layer and significant wrinkling.

Base layer: propylene homopolymer (MFR = 2.5 g/10min, [mmmm] = 96.5%, Tc = 116°C, Tm = 163°C) as a polypropylene resin was heated and melted at 250°C in an extruder, and a molten polypropylene resin composition thus obtained was extruded from a T-die at 250°C into a sheet shape. The resulting molten sheet was then contacted with a cooling roll set at 37°C, and the molten sheet was directly introduced into a water tank set at 29°C to obtain an unstretched sheet. Subsequently, the unstretched sheet was longitudinally stretched 4.5 times at 140°C with two pairs of rolls, then the resulting longitudinally stretched sheet was clipped at both ends and introduced into a hot air oven (tenter) to be preheated at 174°C. After preheating, the longitudinally stretched sheet was stretched 10 times at 160°C in the width direction and subjected to heat treatment at 165°C with relaxing in the width direction by 6.7%.

On one surface of the resulting biaxially oriented polypropylene film, corona treatment was conducted with a corona plasma treatment equipment (manufactured by KASUGA DENKI, INC.) under the condition of 13 W/m²·min. After the corona treatment, the film was wound with a winder, and a biaxially oriented polypropylene film with a thickness of 16 μm was obtained and used.

Sealant layer: an unstretched polypropylene film having a thickness of 30 μm was used, the same as in Example 1.


Comparative Example 2

A resin laminate for packaging material was produced by employing the same lamination method as Example 1 except that the following biaxially stretched polypropylene film as a base layer and the following unstretched polypropylene film as a sealant layer were used. The biaxially stretched polypropylene film of the base layer had a thickness of 16 μm, a fusion initiation temperature (FIT-B) of 165°C, a heat shrinkage rate at 150°C in the longitudinal direction of 4.7%, a heat shrinkage rate at 150°C in the width direction of 2.0%, a Young's modulus in the longitudinal direction of 2.3 GPa, and a Young's modulus in the width direction of 4.0 GPa.

The unstretched polypropylene film of the sealant layer had a seal strength reaching temperature (SRT-S) of 143°C, and a difference between the fusion initiation temperature (FIT-B) of the base layer and (SRT-S) was 22°C.

The resin laminate for packaging material was obtained with bad heat seal finish quality due to peeling of the surface of the base layer and significant wrinkling.

Base layer: the biaxially stretched polypropylene film produced in Example 2 was used.

Sealant layer: an unstretched polypropylene film (PYLEN (registered trademark), type: CT P1128, thickness: 30 μm, seal strength reaching temperature (SRT-S): 143°C, manufactured by TOYOBO CO., LTD.) was used. In the sealant layer, the polypropylene unit component amount was 70% by mass or more.

Comparative Example 3

A resin laminate for packaging material was produced by employing the same lamination method as Example 1 except that the following biaxially stretched polypropylene film as a base layer and the following unstretched polypropylene film as a sealant layer were used. The biaxially stretched polypropylene film of the base layer has a thickness of 16 μm, a fusion initiation temperature (FIT-B) of 165°C, a heat shrinkage rate at 150°C in the longitudinal direction of 4.7%, a heat shrinkage rate at 150°C in the width direction of 2.0%, a Young's modulus in the longitudinal direction of 2.3 GPa, and a Young's modulus in the width direction of 4.0 GPa. The unstretched polypropylene film of the sealant layer had a seal strength reaching temperature (SRT-S) of 125°C, and a difference between the fusion initiation temperature (FIT-B) of the base layer and (SRT-S) was 40°C.

The resin laminate for packaging material was obtained with good heat seal finish quality without peeling and wrinkling at the seal strength reaching temperature, but the heat seal finish quality was bad at the temperature 10°C higher than the seal strength reaching temperature due to peeling of the surface of the base layer and significant wrinkling.

Base layer: the biaxially stretched polypropylene film produced in Example 2 was used.

Sealant layer: an unstretched polypropylene film (PYLEN (registered trademark), type: CT P1162, thickness: 30 μm, seal strength reaching temperature (SRT-S): 125°C, manufactured by TOYOBO CO., LTD.) was used. In the sealant layer, the polypropylene unit component amount was 70% by mass or more.

Reference Example 1

A resin laminate for packaging material was produced by laminating the following biaxially stretched polyethylene terephthalate film as a base layer and the following unstretched polypropylene film as a sealant layer by the method described above, similarly to Example 1. The biaxially stretched polyethylene terephthalate film (type: E5100, thickness: 12 μm, manufactured by TOYOBO CO., LTD.) as a base layer had a fusion initiation temperature (FIT-B) of higher than 200°C, a heat shrinkage rate at 150°C in the longitudinal direction of 1.4%, a heat shrinkage rate at 150°C in the width direction of 0.2%, a Young's modulus in the longitudinal direction of 3.9 GPa, and a Young's modulus in the width direction of 4.0 GPa. The unstretched polypropylene film of the sealant layer had a seal strength reaching temperature (SRT-S) of 111°C, and a difference between the fusion initiation temperature (FIT-B) of the base layer and (SRT-S) was greater than 89°C.

The obtained resin laminate for packaging material had a reaching heat seal temperature of 160°C and a reaching heat seal strength of 5.0 N/15mm. The resin laminate for packaging material was obtained with good heat seal finish quality, without peeling of the surface of the base layer and wrinkling.

Base layer: a biaxially stretched polyethylene terephthalate film (TOYOBO ESTER Film (registered trademark), manufactured by TOYOBO CO., LTD.), type: E5100, thickness: 12 μm) was used.

Sealant layer: an unstretched polypropylene film having a thickness of 30 μm was used, the same as in Example 1.

[Table 1]

| | | | Example 1 | Example 2 | Example 3 | Example 4 | Comparative Example 1 | Comparative Example 2 | Comparative Example 3 | Reference Example 1 |
|---|---|---|---|---|---|---|---|---|---|---|
| Base layer | Raw material | - | PP | PP | PP | PP | PP | PP | PP | PET |
| | Stretching process | - | Biaxial stretching | Biaxial stretching | Biaxial stretching | Biaxial stretching | Biaxial stretching | Biaxial stretching | Biaxial stretching | Biaxial stretching |
| | Thickness | gm | 16 | 16 | 16 | 16 | 16 | 16 | 16 | 12 |
| | Fusion initiation temperature (FIT-B) | °C | 166 | 166 | 164 | 161 | 162 | 166 | 166 | >200 |
| | Heat shrinkage rate at 150°C (Longitudinal direction) | % | 4.5 | 4.7 | 5.0 | 6.1 | 15.5 | 4.7 | 4.7 | 1.4 |
| | Heat shrinkage rate at 150°C (Width direction) | % | 0.8 | 2.0 | 4.7 | 6.6 | 22.7 | 2.0 | 2.0 | 0.2 |
| | Young's modulus (Longitudinal direction) | GPa | 2.2 | 2.3 | 2.0 | 2.2 | 1.8 | 2.3 | 2.3 | 3.9 |
| | Young's modulus (Width direction) | GPa | 3.6 | 4.0 | 4.2 | 4.3 | 2.9 | 4.0 | 4.0 | 4.0 |

EP 4 431 270 A1

14

| | | | Example 1 | Example 2 | Example 3 | Example 4 | Comparative Example 1 | Comparative Example 2 | Comparative Example 3 | Reference Example 1 |
|---|---|---|---|---|---|---|---|---|---|---|
| Sealant layer | Raw material | - | PP | PP | PP | PP | PP | PP | PP | PP |
| | Stretching process | - | Unstretched | Unstretched | Unstretched | Unstretched | Unstretched | Unstretched | Unstretched | Unstretched |
| | Thickness | $\mu$m | 30 | 30 | 30 | 30 | 30 | 30 | 30 | 30 |
| | Seal strength reaching temperature (SRT-S) | °C | 111 | 111 | 111 | 111 | 111 | 143 | 126 | 111 |
| (FIT-B) - (SRT-S) | | °C | 66 | 54 | 63 | 60 | 41 | 22 | 40 | >89 |
| Seal strength reaching temperature of laminate | | °C | 111 | 111 | 111 | 111 | 111 | 143 | 126 | 111 |
| Reaching heat seal strength of laminate | | N/15mm | 15.4 | 16.6 | 16.6 | 15.5 | 15.5 | 6.6 | 7.8 | 16.0 |
| Finish quality after heat seal at seal strength reaching temperature of laminate | | - | Good | Good | Good | Good | Bad | Bad | Acceptable | Good |
| Finish quality after heat seal at seal strength reaching temperature of laminate + 10°C | | - | Good | Good | Good | Acceptable | Bad | Bad | Bad | Good |

EP 4 431 270 A1

INDUSTRIAL APPLICABILITY

The resin laminate for packaging material of the present invention can be suitably used as a mono-material packaging for bag-making by heat sealing, enabling heat sealing at a high temperature and at a high speed comparable to a resin laminate for packaging material comprising a polyester (PET) film of a base layer and a polyolefin film of a sealant layer.

**Claims**

1.  A resin laminate for packaging material comprising at least a base layer and a sealant layer, wherein each of resin compositions for the base layer and the sealant layer comprises the same resin (A) as a main component, the base layer has a fusion initiation temperature (FIT-B), the sealant layer has a seal strength reaching temperature (SRT-S), the temperatures satisfying the following inequalities of from (1) to (3):

$$50°C \leq (FIT\text{-}B) - (SRT\text{-}S) \leq 90°C \qquad \text{Inequality (1)}$$

$$90°C \leq (SRT\text{-}S) \leq 120°C \qquad \text{Inequality (2)}$$

$$160°C \leq (FIT\text{-}B) \leq 180°C \qquad \text{Inequality (3)}$$

2.  The resin laminate for packaging material according to claim 1, wherein the main component unit of the resin (A) is a propylene unit, and the base layer is a biaxially stretched polypropylene film.

3.  The resin laminate for packaging material according to claim 2, wherein the biaxially stretched polypropylene film of the base layer has a heat shrinkage rate at 150°C in a longitudinal direction of 6.5% or less and a heat shrinkage rate at 150°C in a width direction of 5.5% or less.

4.  The resin laminate for packaging material according to claim 2 or 3, wherein the biaxially stretched polypropylene film of the base layer has a Young's modulus in the longitudinal direction of 2.0 GPa or more and a Young's modulus in the width direction of 3.5 GPa or more.

5.  The resin laminate for packaging material according to any one of claims 1 to 4, wherein the resin laminate for packaging material has an adhesive layer between the base layer and the sealant layer.

## INTERNATIONAL SEARCH REPORT

| | International application No. |
|---|---|
| | **PCT/JP2022/038788** |

**A. CLASSIFICATION OF SUBJECT MATTER**

***B32B 7/027***(2019.01)i; ***B32B 7/022***(2019.01)i; ***B32B 7/028***(2019.01)i; ***B32B 7/12***(2006.01)i; ***B32B 27/00***(2006.01)i; ***B32B 27/32***(2006.01)i; ***B65D 65/40***(2006.01)i

FI: B32B7/027; B32B7/022; B32B7/028; B32B7/12; B32B27/00 B; B32B27/32 E; B65D65/40 D

According to International Patent Classification (IPC) or to both national classification and IPC

**B. FIELDS SEARCHED**

Minimum documentation searched (classification system followed by classification symbols)

B32B1/00-43/00;B65D65/00-65/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/244708 A1 (TOYOBO CO., LTD.) 26 December 2019 (2019-12-26) claims, paragraphs [0058]-[0087], example 1, tables 1-4 | 1-5 |
| A | JP 2020-192896 A (DENSO CORP.) 03 December 2020 (2020-12-03) | 1-5 |
| A | WO 2007/015415 A1 (MITSUI CHEMICALS INC.) 08 February 2007 (2007-02-08) | 1-5 |
| A | JP 2021-169194 A (TORAY ADVANCED FILM CO., LTD.) 28 October 2021 (2021-10-28) | 1-5 |
| A | JP 2018-167867 A (MITSUI CHEMICALS TOHCELLO, INC.) 01 November 2018 (2018-11-01) | 1-5 |
| A | JP 2005-178337 A (TORAY ADVANCED FILM CO., LTD.) 07 July 2005 (2005-07-07) | 1-5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/038788**

| Patent document cited in search report | | | Publication date (day/month/year) | Patent family member(s) | | | Publication date (day/month/year) |
|---|---|---|---|---|---|---|---|
| WO | 2019/244708 | A1 | 26 December 2019 | US 2021/0213720 A1 claims, paragraphs [0113]-[0168], example 1, tables 1-4 EP 3812152 A1 CN 112351885 A KR 10-2021-0021528 A TW 202000469 A | | | |
| JP | 2020-192896 | A | 03 December 2020 | (Family: none) | | | |
| WO | 2007/015415 | A1 | 08 February 2007 | US 2008/0268221 A1 EP 1911803 A1 CA 2617251 A KR 10-2008-0039962 A CN 101233185 A TW 200714655 A | | | |
| JP | 2021-169194 | A | 28 October 2021 | (Family: none) | | | |
| JP | 2018-167867 | A | 01 November 2018 | (Family: none) | | | |
| JP | 2005-178337 | A | 07 July 2005 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020262326 A
- WO 2021054349 A
- JP 2020157715 A
- WO 2020080507 A

### Non-patent literature cited in the description

- **ZAMBELLI.** *Macromolecules,* 1973, vol. 6, 925